**Europäisches Patentamt**

**European Patent Office**

**Office européen des brevets**

(11) Numéro de publication : **0 355 074 B1**

(12) **FASCICULE DE BREVET EUROPEEN**

(45) Date de publication du fascicule du brevet :
29.04.92 Bulletin 92/18

(51) Int. Cl.$^5$ : **A01K 89/02**

(21) Numéro de dépôt : **89420294.4**

(22) Date de dépôt : **02.08.89**

(54) **Moulinet de pêche à dispositif de repérage de la force de freinage.**

(30) Priorité : **05.08.88 FR 8810772**

(43) Date de publication de la demande :
**21.02.90 Bulletin 90/08**

(45) Mention de la délivrance du brevet :
**29.04.92 Bulletin 92/18**

(84) Etats contractants désignés :
**DE GB IT**

(56) Documents cités :
**GB-A- 2 179 753**

(73) Titulaire : **MITCHELL SPORTS**
**30, rue de Messy**
**F-74300 Cluses (FR)**

(72) Inventeur : **L'Host, Pierre**
**Le Martelet Chatillon sur Cluses**
**F-74300 Cluses (FR)**
Inventeur : **Ruin, Jean**
**En Bud Thyez**
**F-74300 Cluses (FR)**
Inventeur : **Zanon, Joseph**
**Le Pré du Cret Marignier**
**F-74130 Bonneville (FR)**

(74) Mandataire : **de Beaumont, Michel**
**Cabinet Poncet 7, chemin de Tillier B.P. 317**
**F-74008 Annecy Cédex (FR)**

## Description

La présente invention concerne les moulinets à lancer pour la pêche munis d'un dispositif pour éviter la rupture de la ligne en cas de surtension. Ce dispositif est généralement appelé frein de bobine, il provoque le dévidement de la ligne hors de la bobine où elle est enroulée lorsque la tension dépasse une valeur pré-réglée, valeur inférieure à la limite de rupture de cette ligne. L'invention concerne plus particulièrement de tels moulinets dont le réglage du frein est ajusté par action du pêcheur sur un bouton rotatif, lequel bouton tourillonne selon un axe du carter du moulinet.

Une forme très couramment utilisée de ce type de moulinet comporte généralement une bobine solidaire à une extrémité d'un axe dont l'autre extrémité pénètre dans le carter et est liée en rotation à celui-ci par l'intermédiaire d'un limiteur de couple à friction, lequel est constitué d'un empilage de rondelles alternativement solidaires en rotation soit de l'axe, soit du carter, cet empilage étant pressé par un ressort bandé par une vis liée au bouton rotatif de réglage. La rotation du bouton, communiquée à la vis, provoque la translation de ladite vis par rapport au carter, laquelle translation modifie le bandage du ressort permettant ainsi le réglage du couple de friction.

Sur les moulinets actuels, la fonction de réglage du frein est réalisée de deux manières principales, en jouant sur les caractéristiques de raideur du ressort et de pas du filetage de la vis du bouton de réglage : selon une première possibilité, décrite dans le EP-A-0 157 714, le réglage s'effectue sur deux à trois tours de bouton, c'est-à-dire que la plage totale de réglage du frein correspond à une rotation de deux à trois révolutions complètes du bouton ; selon une seconde possibilité, décrite dans le DE-A-3 147 209, la plage totale de réglage du frein correspond à une seule révolution du bouton de réglage.

Lorsque le réglage est obtenu en une seule révolution du bouton, on peut repérer facilement la force de réglage en repérant la position angulaire du bouton par rapport au carter. Par exemple, des graduations périphériques du bouton, venant en regard d'un repère fixe du carter, suffisent à repérer sans ambiguïté le réglage du frein. Ainsi, un pêcheur qui veut dérégler le frein et ensuite revenir à sa position de réglage précédente peut le faire de manière certaine, puisque la position de réglage précédente était repérée sans ambiguïté.

Par contre, dans les moulinets dans lesquels la plage de réglage du frein s'effectue en plus d'un tour de bouton, de simples graduations périphériques du bouton, en regard d'un repère fixe de carter, ne permettent plus le repérage certain du réglage de bouton : en effet, une même portion périphérique de bouton peut venir en regard du repère fixe de carter pour plusieurs réglages différents de frein se distinguant les uns les autres par un nombre entier de tours de bouton. Le repérage devient ainsi ambigu, et le pêcheur est obligé de se souvenir du nombre de tours qu'il a fait en quittant le réglage précédent, pour revenir à ce réglage en effectuant le même nombre de tours, la graduation périphérique de bouton ne permettant que l'affinage de ce réglage.

Malgré cet inconvénient que constitue l'ambiguïté du repérage, on préfère généralement les freins dans lesquels le réglage est obtenu par plusieurs révolutions du bouton, permettant une plage de réglage plus longue et une augmentation du couple de friction plus douce et progressive, de façon à obtenir un réglage fin souhaité par la majorité des pêcheurs.

La présente invention a pour objet de proposer une nouvelle structure de moulinet offrant à la fois une large plage de réglage, c'est-à-dire un réglage obtenu par un bouton rotatif à plusieurs révolutions, et un repérage de position sans ambiguïté. Chaque réglage de freinage, c'est-à-dire chaque position angulaire du bouton de réglage, correspond à un seul et unique signe de repérage, un même signe de repérage correspondant à une seule position angulaire du bouton.

Ainsi, l'invention propose des moyens permettant de repérer la position angulaire de bouton de réglage de frein de moulinet sur une plage angulaire supérieure à un tour.

Les moyens mis en oeuvre selon l'invention pour obtenir cet effet de repérage non ambigu de la position de réglage du frein sont en outre particulièrement adaptés à la structure habituelle des moulinets, ne bouleversent pas les habitudes des pêcheurs, respectent l'ergonomie, ne provoquent pas un surdimensionnement gênant du bouton rotatif de commande, ne perturbent pas les fonctions habituelles du moulinet.

Pour atteindre ces objets ainsi que d'autres, le moulinet de pêche selon l'invention comprend, de façon connue, les éléments de moulinets traditionnels, à savoir :

– un carter principal,

– un frein commandé par un bouton rotatif de frein tourillonnant dans le carter,

– des moyens de repérage de la position angulaire du bouton rotatif de frein,

– la plage de réglage totale du frein requérant une plage de rotation de bouton rotatif de frein dont l'amplitude est supérieure à un tour.

Selon l'invention, les moyens de repérage de la position angulaire du bouton rotatif de frein comprennent des moyens supports, et une suite ordonnée monotone de signes de repérage disposés sur les moyens supports ; les moyens de repérage comprennent au moins une pièce mobile constituée soit par lesdits moyens supports soit par un curseur, ladite pièce mobile étant distincte du bouton et entraînée mécaniquement par ledit bouton dans son déplacement en rotation par rapport au carter pour se déplacer elle-même par rapport au carter sous l'action de la rotation du bouton et mettre en valeur et rendre apparent, lors de son déplacement, l'un des signes de repérage du support à chaque position angulaire du bouton; à chaque signe de repérage du support correspond une position angulaire unique du bouton, et à chaque position angulaire de bouton correspond un signe de repérage distinct et reconnaissable du support.

Selon une première possibilité, ladite pièce mobile est constituée par le support lui-même, qui se déplace sous l'action de la rotation du bouton de réglage, et qui présente en permanence au moins un signe de repérage en regard d'un repère fixe du carter ; lors de la rotation du bouton, les signes de repérage défilent en regard dudit repère fixe de carter.

Dans une première variante, le support est un ruban enroulé plusieurs fois autour d'une douille porte-ruban avec un léger jeu radial. La douille porte-ruban est montée rotative sur une portion de carter cylindrique et coaxiale au bouton, et est entraînée en rotation par ledit bouton. Le ruban est solidarisé selon ses deux extrémités à la douille porte-ruban, et présente une portion intermédiaire coulissant entre des guides du carter en regard d'une fenêtre de carter. Lors de la rotation du bouton, la fenêtre de carter laisse apparaître en permanence une portion de spire intermédiaire de ruban portant les signes de repérage et défilant entre les guides de carter qui assurent le maintien des autres spires de ruban à l'écart de la fenêtre.

Selon une autre variante, le support est un anneau périphérique monté rotatif sur le carter coaxialement au bouton. L'anneau est entraîné en rotation par le bouton par l'intermédiaire d'un dispositif démultiplicateur, de sorte que la plage de réglage totale du bouton correspond au plus à une révolution de l'anneau. Une lumière de carter laisse apparente une portion périphérique de l'anneau.

Selon une autre variante, le support est un tambour guidé en déplacement axial sur un fût de carter coaxial au bouton, le tambour étant relié mécaniquement au bouton par une liaison autorisant sa libre translation relative axiale et interdisant sa rotation relative. L'axe du bouton définit la direction axiale. Le tambour est relié au fût de carter par une liaison produisant un mouvement relatif hélicoïdal du tambour sur le fût lors de la rotation de tambour provoquée par la rotation du bouton. Le tambour porte, sur sa face extérieure, une piste hélicoïdale de signes de repérage défilant en regard d'une lumière de carter.

Selon une autre variante, le support est un plateau périphérique rotatif à axe radial monté sur le carter et comportant une portion de sa surface extérieure en regard d'une lumière de carter laissant apparaître des signes de repérage. On entend par direction radiale une perpendiculaire à l'axe du bouton. Le plateau est entraîné en rotation par une transmission mécanique sollicitée par le bouton de réglage. La transmission mécanique autorise la libre translation axiale du bouton de réglage.

Selon une seconde possibilité, le moyen support est un tambour rotatif coaxial au bouton et solidaire en rotation dudit bouton ; le tambour comporte, sur sa surface périphérique cylindrique, une piste hélicoïdale portant les signes de repérage, et un relief périphérique hélicoïdal ; la pièce mobile est, dans ce mode de réalisation, un curseur monté coulissant longitudinalement sur des guides du carter et comportant une partie en engagement avec le relief périphérique hélicoïdal du tambour ; le curseur est positionné à l'extérieur du tambour et à l'intérieur du carter, en regard d'une lumière longitudinale du carter, de telle manière que le curseur est en permanence en regard d'une portion de la piste hélicoïdale du tambour et que ladite portion de piste hélicoïdale est visible à travers la lumière de carter.

D'autres objets, caractéristiques et avantages de la présente invention ressortiront de la description suivante de modes de réalisation particuliers, faite en relation avec les figures jointes, parmi lesquelles :

– les figures 1 à 3 illustrent un premier mode de réalisation de dispositif de repérage selon l'invention, comportant un ruban ;

– la figure 4 illustre un second mode de réalisation, à support annulaire périphérique et transmission par satellites ;

– la figure 5 illustre un mode de réalisation à support annulaire périphérique et transmission par arbre intermédiaire ;

– les figures 6 et 7 illustrent un mode de réalisation à support annulaire périphérique et transmission par came et dentures ;

– les figures 8 et 9 illustrent un mode de réalisation à support en forme de tambour à déplacement hélicoïdal ;

– les figures 10 et 11 illustrent un mode de réalisation dans lequel le support comprend un élément annulaire rotatif coaxial au bouton, et un plateau rotatif à axe radial ;

– les figures 12 et 13 illustrent un mode de réalisation dans lequel le support est un plateau rotatif avec transmission par vis sans fin ;

– les figures 14 et 15 illustrent un mode de réalisation dans lequel le support est un plateau rotatif avec transmission par crémaillère ; et

– les figures 16 et 17 illustrent un mode de réalisation dans lequel le support est un tambour à déplacement hélicoïdal associé à une fenêtre mobile par translation.

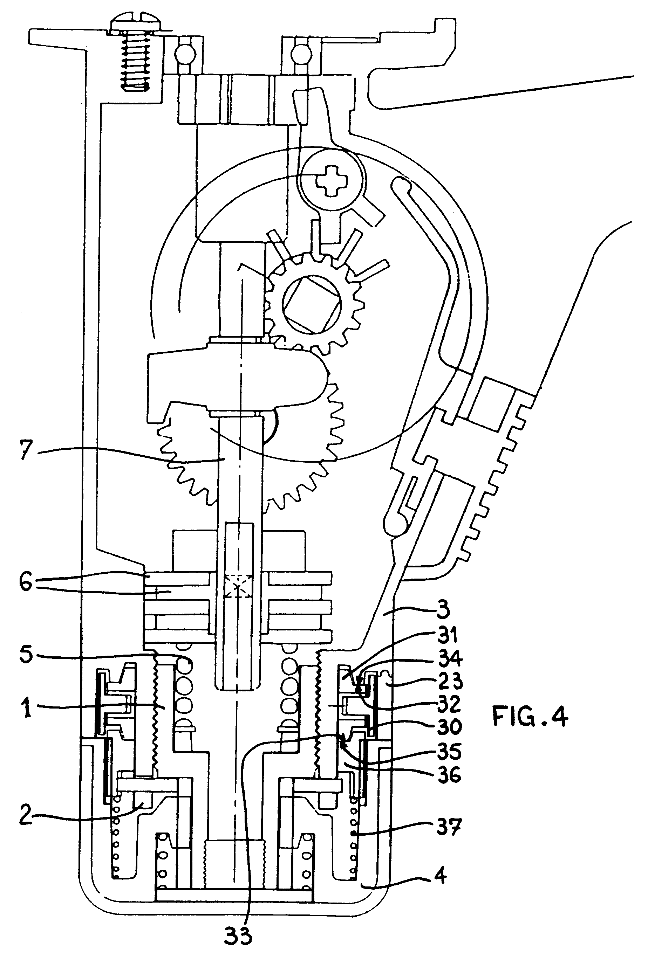

Dans la description qui suit, le moulinet de pêche est supposé être conforme à une réalisation classique qui comporte une vis de réglage 1 contenue et se vissant dans un fût 2 prolongeant le carter 3 du moulinet ; le bouton de réglage de frein 4 est solidaire en rotation de la vis de réglage 1, et entoure partiellement ledit fût 2. Si l'on se réfère par exemple à la figure 4, représentant de manière plus extensive les organes du moulinet, la rotation du bouton de réglage 4 provoque un déplacement hélicoïdal du bouton par rapport au carter 3. Le bouton de réglage 4 repousse un ressort de frein 5 lui-même en appui contre un empilage de rondelles 6 de friction, certaines rondelles étant solidaires en rotation du carter, d'autres rondelles de l'empilage étant solidaires en rotation de l'arbre longitudinal principal 7 de moulinet. Dans le mode de réalisation représenté, l'arbre 7 est solidaire de la bobine destinée à contenir le fil à pêche. Un tel moulinet est du type moulinet à tambour fixe avec frein arrière. On comprendra que l'invention s'applique également à d'autres types de moulinets, dans la mesure où le frein est commandé par un bouton de réglage à plusieurs tours.

Pour simplifier l'exposé, chacun des modes de réalisation ci-après sera supposé être adapté sur ce même type de moulinet à tambour fixe et frein arrière. L'axe de rotation I-I du bouton de réglage 4 définit la direction axiale du dispositif, et l'on entendra par direction radiale les perpendiculaires coupant l'axe I-I.

Selon l'invention, les moyens de repérage de la position angulaire du bouton rotatif 4 de frein comprennent une suite ordonnée monotone de signes de repérage disposés sur des moyens supports. Pour simplifier l'exposé, on considèrera que ladite suite ordonnée monotone de signes de repérage est constituée d'une suite de nombres entiers consécutifs dans l'ordre croissant ou décroissant. On comprendra que l'on peut, sans sortir du cadre de l'invention, définir d'autres suites ordonnées monotones de signes de repérage, permettant un repérage non ambigu des positions angulaires. On peut par exemple associer des chiffres et des couleurs, des lettres, ou d'autres signes reconnaissables.

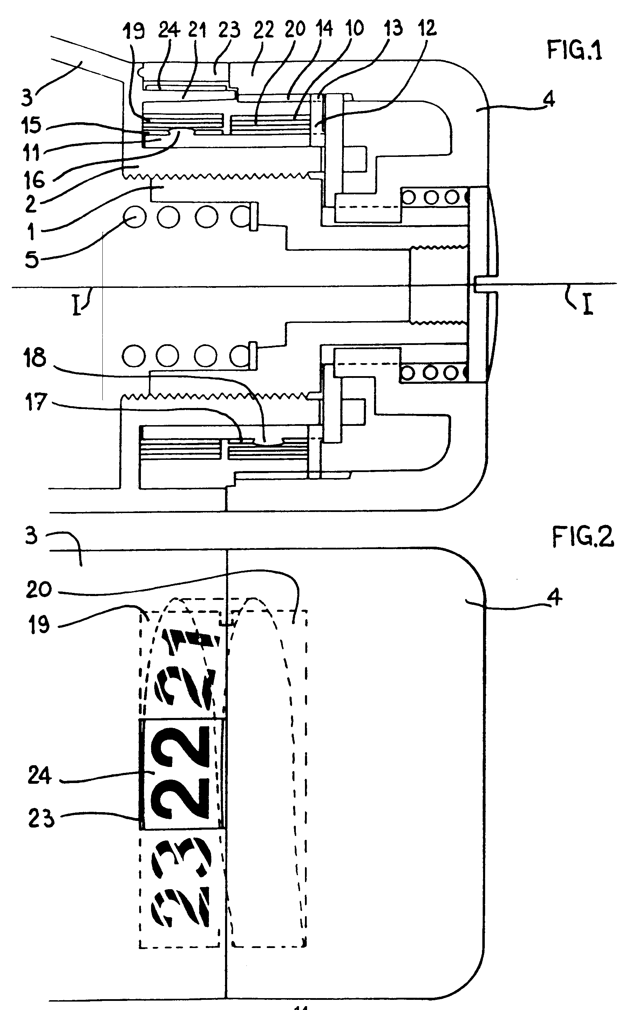

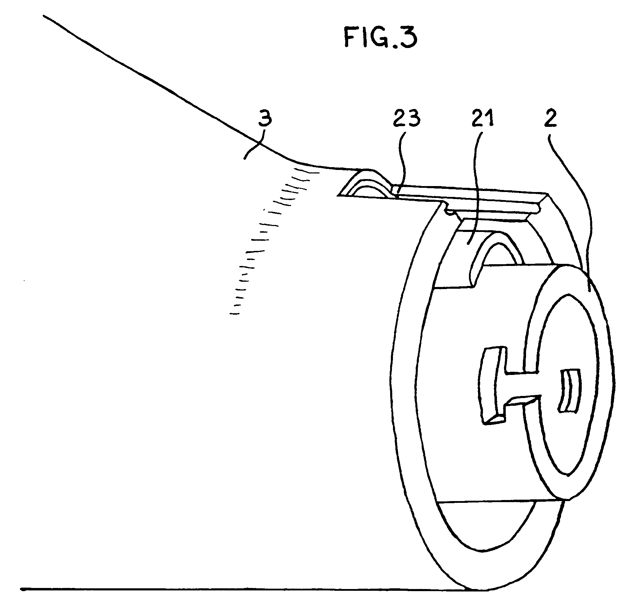

Dans le mode de réalisation représenté sur les figures 1 à 3, le moulinet comprend un ruban 10 enroulé plusieurs fois autour d'une douille porte-ruban 11, le ruban 10 n'étant pas trop serré sur la douille 11 de manière à présenter un léger jeu radial. La douille porte-ruban 11 est montée rotative sur le fût 2 de carter, le fût 2 étant coaxial au bouton de réglage 4. La douille porte-ruban 11 est entraînée en rotation par le bouton de réglage 4 auquel elle est reliée par un entraîneur 12. L'entraîneur 12, solidaire de la douille 11, comporte une périphérie 13 dentée dont les dents s'engagent dans une portion intérieure cylindrique dentée 14 du bouton 4. Cette liaison assure la solidarisation en rotation de la douille porte-ruban 11 et du bouton 4, tout en permettant la libre translation axiale de la douille par rapport au bouton.

Le ruban 10 est enroulé plusieurs fois autour de la douille porte-ruban 11. Sa première extrémité 15 est solidarisée à la portion antérieure de la douille porte-ruban 11, par exemple par un ergot 16, tandis que sa seconde extrémité 17 est solidarisée à la portion postérieure de la douille porte-ruban, par exemple par un ergot 18. Les spires formées par les parties proches de la première extrémité 15 de ruban forment un premier enroulement 19, tandis que les spires constituées par les parties proches de la seconde extrémité 17 du ruban forment un second enroulement 20. Entre le premier enroulement 19 et le second enroulement 20, le ruban est guidé axialement par des moyens de guidage solidaires du carter 3. Dans le mode de réalisation représenté, les moyens de guidage comprennent une languette 21 de carter, s'étendant selon une direction axiale, disposée entre la paroi cylindrique extérieure 22 de carter et la douille porte-ruban 11. Une portion intermédiaire 24 de ruban 10 est engagée à l'extérieur de la languette 21. Une lumière ou une fenêtre transparente 23 de carter est ménagée en regard de la languette 21, de sorte que l'utilisateur peut voir la face externe de la portion intermédiaire 24 de ruban passant sur la languette 21. On a ainsi représenté sur les figures 1 à 3 la portion intermédiaire 24 de ruban, entre le premier enroulement 19 et le second enroulement 20, passant sur la languette 21. Les signes de repérage sont imprimés sur la face externe du ruban 10, et apparaissent successivement dans la fenêtre ou lumière 23 comme le représente la figure 2. La portion intermédiaire 24 de ruban est maintenue en position d'une part par la languette 21, d'autre part par le carter 3 lui-même et par le bouton 4, comme le représente la figure 1. On comprend que la languette 21 maintient un écartement constant entre la fenêtre 23 et la portion intermédiaire 24 de ruban. D'autres modes de réalisation sont toutefois possibles, selon l'invention, pour assurer le maintien et le guidage de la portion intermédiaire 24 de ruban. On peut par exemple utiliser des ergots solidaires du carter 3, disposés radialement en deux positions angulairement séparées autour du ruban. Les ergots restent en appui sur les tranches du ruban, maintenant la portion intermédiaire 24 de ruban en regard de la fenêtre 23 de carter, tout en séparant les deux enroulements 19 et 20 et en maintenant les autres spires de ruban à l'écart de la fenêtre.

Lors de la rotation du bouton de réglage 4, les spires de ruban passent progressivement de l'un des enroulements 19 ou 20 à l'autre enroulement, et la portion intermédiaire 24 de ruban défile devant la fenêtre 23 de carter, laissant apparaître en permanence une portion de ruban portant les signes de repérage. En prévoyant plusieurs tours de ruban 10 sur la douille porte-ruban 11, il est ainsi possible de repérer de manière univoque la position angulaire du bouton de réglage 4 selon plusieurs révolutions de bouton de réglage 4.

Dans les modes de réalisation représentés sur les figures 4 à 7, le moulinet comprend également une fenêtre transparente ou lumière 23 laissant apparaître une portion d'un support interne portant des signes de repérage. Dans ces trois modes de réalisation, le support de signes de repérage est un anneau périphérique 30, monté rotatif dans le carter 3 coaxialement au bouton de réglage 4. L'anneau périphérique 30 est entraîné en rotation par le bouton par l'intermédiaire d'un dispositif démultiplicateur.

Dans le mode de réalisation de la figure 4, le dispositif démultiplicateur comprend des satellites tels que le satellite 31, répartis sur la périphérie interne de l'anneau 30, et tourillonnant chacun sur un axe radial porté par l'anneau. Chaque satellite peut être soit un simple cylindre dont l'axe s'étend radialement, soit un assemblage de deux cylindres de diamètres différents liés tel que le représente la figure. Ainsi, chaque satellite comprend une première piste périphérique 32 dentée, et une seconde piste périphérique dentée 33 ; la première piste périphérique dentée 32 s'engrène sur une piste frontale 34 dentée de carter, la seconde piste périphérique dentée 33 s'engrenant sur une piste frontale dentée 35 d'une bague intermédiaire axiale 36. La bague intermédiaire 36 est montée rotative et coulissante sur le fût axial 2 de carter, et est reliée au bouton de réglage 4 par une liaison mécanique autorisant sa libre translation axiale et interdisant sa rotation relative. Pour cela, la périphérie de la bague intermédiaire 36 présente des nervures axiales s'engageant dans des rainures axiales du bouton 4. Des moyens élastiques 37, tels qu'un ressort hélicoïdal de compression, sollicitent en permanence la bague intermédiaire 37 en direction des satellites 31, pour assurer l'engrènement des satellites 31 sur les pistes frontales 34 de carter et 33 de bague intermédiaire 36. L'anneau périphérique 30 porte, sur sa face extérieure, les signes de repérage visibles à travers la fenêtre transparente 23.

Lorsque l'on anime le bouton de réglage 4, sa rotation est transmise à la bague intermédiaire 36, laquelle fait tourner les satellites 31, qui entraînent l'anneau périphérique 30 selon un rapport de division de deux ou plus par rapport au bouton de réglage 4. Si par exemple la totalité du réglage du bouton de réglage 4 se fait sur trois tours de bouton, on choisira un rapport de trois afin que l'anneau périphérique 30 ne fasse qu'un tour.

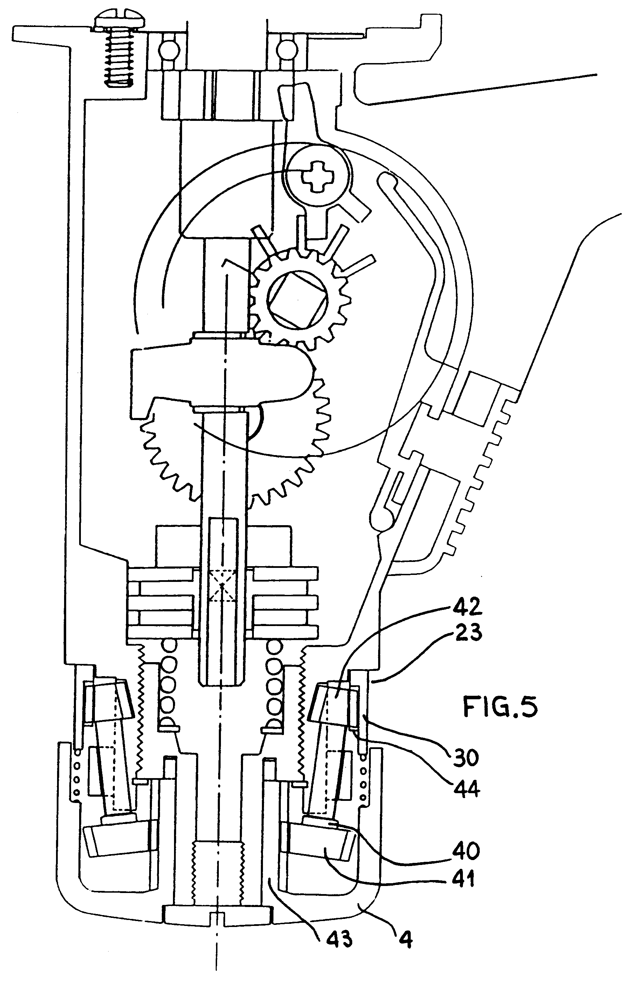

Dans le mode de réalisation de la figure 5, le dispositif démultiplicateur de mouvement entre l'anneau périphérique 30 et le bouton de réglage 4 comprend au moins un arbre de transmission 40 tourillonnant dans des paliers du carter 3. Chaque arbre de transmission 40 porte un premier pignon 41 et un second pignon 42. Le premier pignon 41 engrène sur la surface externe dentée d'un fût axial 43 solidaire du bouton de réglage 4. Le second pignon 42 engrène sur la surface interne dentée 44 de l'anneau 30.

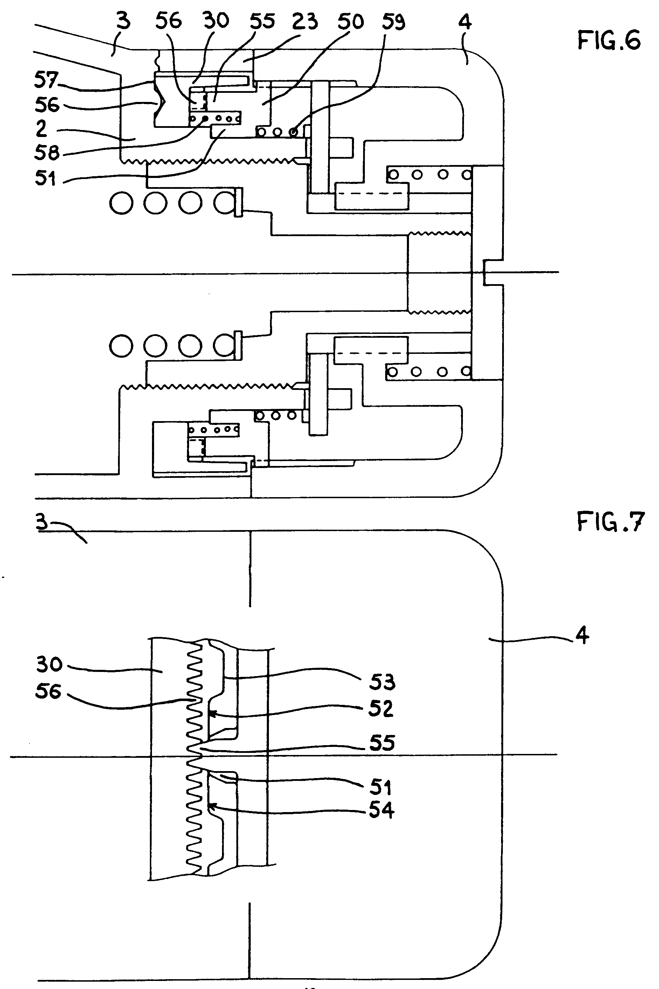

Dans le mode de réalisation représenté sur les figures 6 et 7, le dispositif démultiplicateur entre l'anneau périphérique 30 et le bouton de réglage 4 comprend un anneau porte-griffe 50 monté rotatif et coulissant sur le fût axial 2 de carter. L'anneau porte-griffe 50 est relié au bouton de réglage 4 par une liaison mécanique autorisant sa libre translation axiale et interdisant sa rotation relative. L'anneau porte-griffe comporte des portions frontales saillantes 51, telles que le représente par exemple la figure 7, les portions frontales saillantes 51 étant en appui contre une piste frontale 52 de carter formant came. La piste frontale 52 de carter comporte des parties saillantes telles que la portion 53, et des parties rentrantes telles que la portion 54, réparties sur le pourtour de la piste 52. L'anneau porte-griffe 50 comporte en outre des griffes frontales 55 destinées à s'engager dans les dents d'une piste dentée frontale correspondante de l'anneau périphérique 30. Des moyens d'indexage à engagement sont prévus pour assurer le maintien sélectif de l'anneau périphérique 30 en diverses positions angulaires choisies, de préférence en chaque position angulaire correspondant à l'apparition, dans la fenêtre 23, d'un nombre repère imprimé sur la surface périphérique extérieure de l'anneau 30. Dans le mode de réalisation représenté, les moyens d'indexage comprennent des ergots sphériques d'indexage 56 répartis selon la surface annulaire frontale 57 du carter 3, et coopérant avec des logements correspondants répartis sur la surface frontale de l'anneau 30. Des premiers moyens élastiques 58, tels qu'un ressort hélicoïdal de compression, repoussent l'anneau périphérique 30 contre la surface frontale 57 du carter ; des seconds moyens élastiques 59 repoussent l'anneau porte-griffe 50 contre l'anneau périphérique 30 pour maintenir ses parties frontales saillantes 51 en appui contre la came ou piste frontale de carter 52. La piste frontale de carter 52 est formée de telle manière que, lorsque les parties saillantes 51 d'anneau porte-griffe sont en appui contre des parties rentrantes 54 de piste, les griffes 55 s'engagent dans les dents de la piste dentée 56, et, lorsque les parties saillantes 51 d'anneau porte-griffe sont en engagement de parties saillantes 53 de came, les griffes 55 sont dégagées de la piste dentée 56. Il en résulte que, lors de la rotation du bouton de réglage 4, le bouton de réglage 4 entraîne en rotation permanente l'anneau porte-griffe 50, tandis que l'anneau porte-griffe 50 n'entraîne en rotation l'anneau périphérique 30 que dans les portions de rotation dans lesquelles la partie frontale 51 d'anneau porte-griffe est en appui contre des parties rentrantes 54 de came. Dans les portions de rotation dans lesquelles les portions frontales 51 d'anneau porte-griffe sont en appui contre les partie saillantes 53 de came, les moyens d'indexage bloquent la rotation de l'anneau périphérique 30, qui reste fixe.

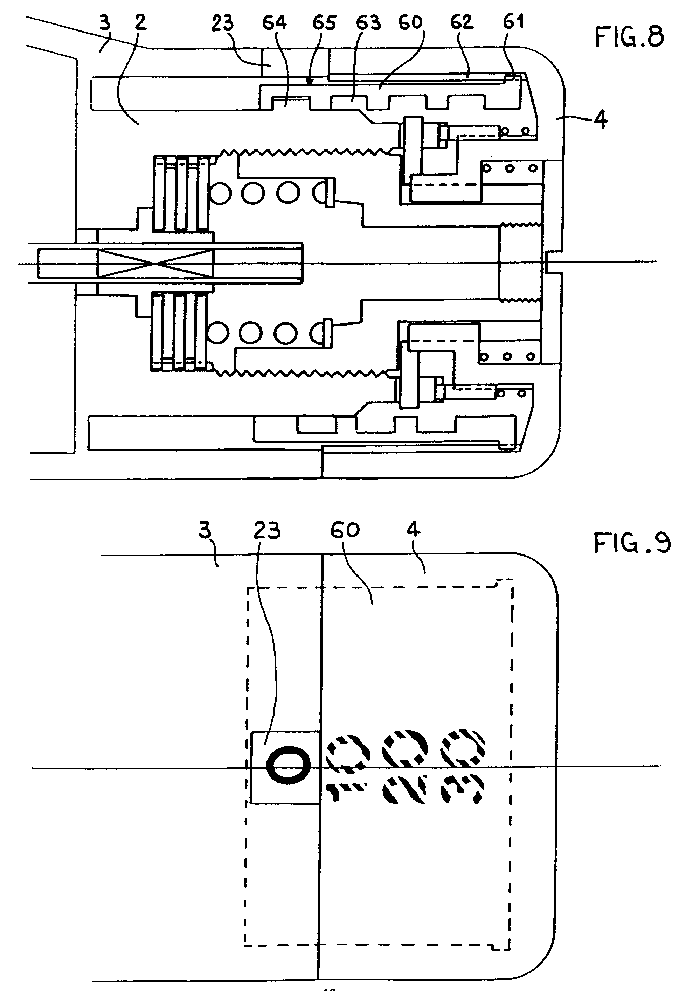

Dans le mode de réalisation des figures 8 et 9, le carter 3 comprend également une fenêtre transparente 23 à travers laquelle l'utilisateur peut voir des signes de repérage portés par un support. Dans ce mode de réalisation, le support est un tambour 60 guidé en rotation et en déplacement axial sur le fût axial 2 de carter. Le tambour 60 est relié mécaniquement au bouton de réglage 4 par une liaison autorisant sa libre translation relative axiale et interdisant sa rotation relative : des dents 61 périphériques extérieures du tambour 60 s'engagent dans des rainures axiales 62 ménagées sur la face interne de paroi cylindrique périphérique du bouton 4. Le tambour 60 est relié au fût de carter 2 par une liaison autorisant un mouvement relatif hélicoïdal du tambour sur le fût lors de la rotation de tambour provoquée par la rotation du bouton 4. Pour cela, le tambour porte, sur sa face intérieure, une rainure hélicoïdale 63 dans laquelle s'engage un ergot cylindrique radial 64 ménagé sur la face extérieure du fût 2 de carter. Le tambour 60 porte, sur sa face périphérique extérieure 65, une piste hélicoïdale de signes de repérage, la piste hélicoïdale des signes de repérage présentant le même pas que la rainure hélicoïdale 63, et étant disposée de manière que les signes de repérage défilent en regard de la lumière de carter 23, lors du mouvement hélicoïdal du tambour 60.

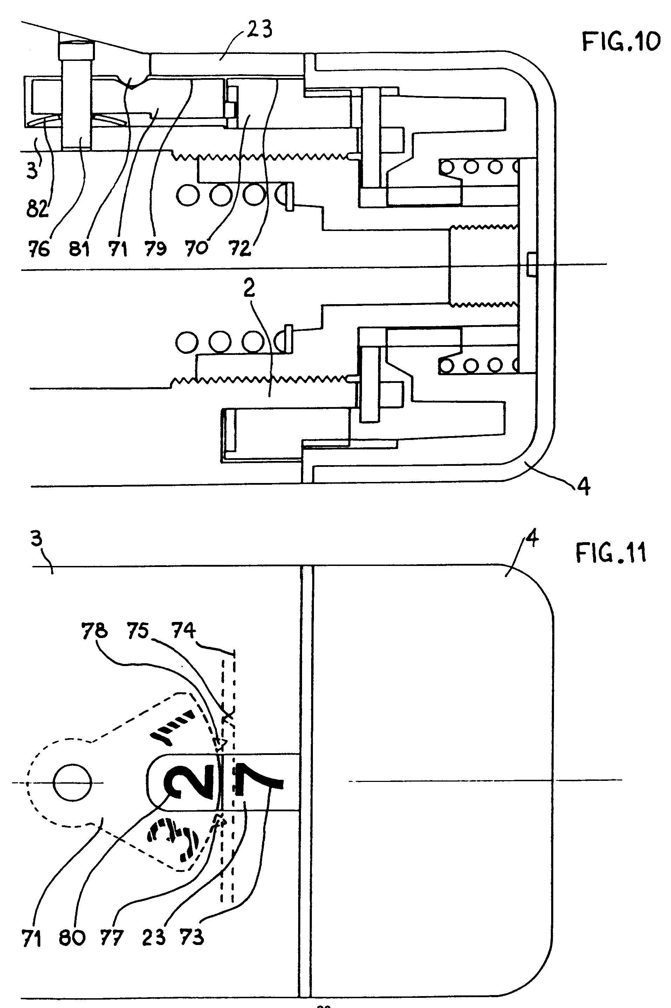

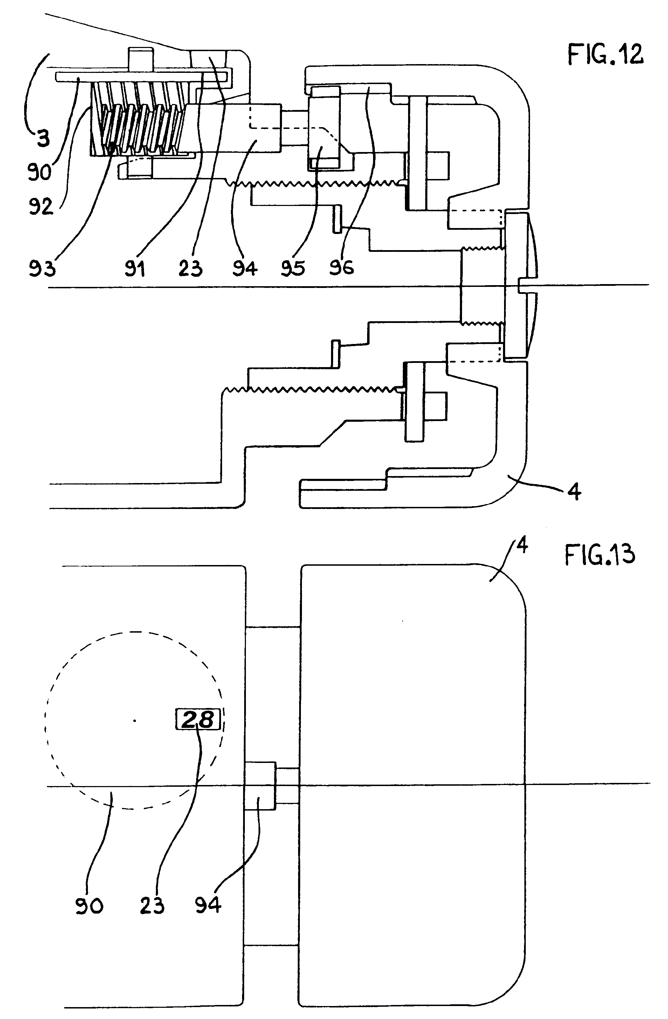

Dans le mode de réalisation représenté sur les figures 10 et 11, le carter 3 comporte également une fenêtre latérale ou lumière 23 à travers laquelle l'utilisateur peut voir les signes de repérage sur le support interne. Dans ce mode de réalisation, le support de signes de repérage comprend deux éléments distincts, à savoir un anneau périphérique 70, et un plateau rotatif 71. L'anneau périphérique 70 est monté rotatif sur le carter coaxialement au bouton, et tourillonne librement sur le fût 2 de carter. L'anneau est entraîné en rotation par le bouton de réglage 4 par l'intermédiaire d'une liaison mécanique interdisant la rotation relative. L'anneau périphérique 70 porte, sur sa surface extérieure 72, une première piste 73 de signes de repérage défilant devant la lumière 23 ou devant une première lumière de carter. L'anneau périphérique 70 comporte une surface frontale 74 munie d'une dent 75.

Le plateau rotatif 71 tourillonne autour d'un pivot 76 radial solidaire du carter 3. Le plateau 71 comporte des dents périphériques telles que les dents 77 et 78, écartées l'une de l'autre et coopérant avec la dent 75 d'anneau périphérique. Le plateau rotatif 71 porte, sur sa face externe 79, une seconde piste 80 de signes de repérage défilant devant la lumière 23 ou devant une seconde lumière de carter.

Lorsque l'utilisateur entraîne le bouton de réglage 4 en rotation, le bouton 4 entraîne en rotation l'anneau périphérique 70. Chaque fois que la dent 75 arrive en regard de la surface périphérique du plateau 71, elle s'engage avec une des dents du plateau telles que les dents 77 et 78 et entraîne ledit plateau 71 en rotation pour incrémenter le plateau d'un intervalle entre deux signes de repérage successifs de la seconde piste 80

de signes de repérage. Des moyens d'indexage à engagement sont également prévus pour assurer le maintien du plateau 71 en des positions successives déterminées. On peut par exemple utiliser des ergots sphériques 81 du carter s'engageant dans des logements correspondants prévus sur la face extérieure 79 du plateau 71, un moyen élastique 82 sollicitant le plateau 71 contre l'ergot 81. A l'usage, la première piste 73 peut comporter des chiffres de 0 à 9, la seconde piste 80 pouvant comporter les chiffres 1, 2 et 3 dans le cas où le bouton de réglage 4 comporte une plage de variation de trois tours.

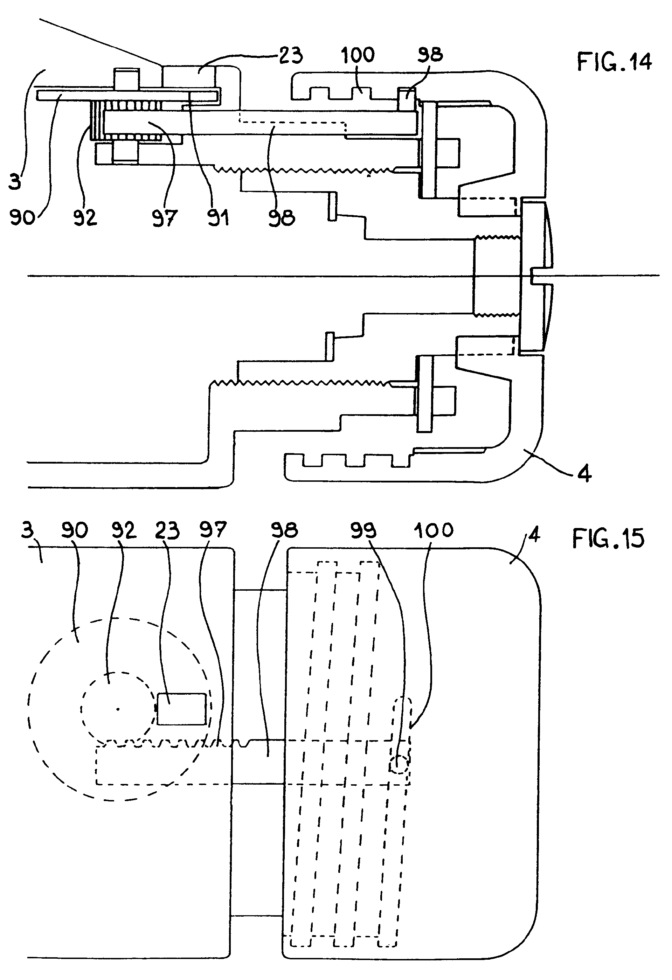

Dans le mode de réalisation des figures 12 et 13, le support de signes de repérage est un plateau périphérique rotatif 90, à axe radial, monté sur le carter 3, une portion de sa surface externe 91 étant apparente à travers la lumière de carter 23, laissant apparaître des signes de repérage. Le plateau rotatif 90 comporte un pignon 92 engrenant avec une vis 93 montée en bout d'un arbre 94. L'arbre 94 tourillonne dans des paliers du carter 3. L'arbre 94 porte un pignon 95 engrenant avec une portion cylindrique intérieure axiale dentée 96 du bouton 4 de réglage, autorisant une translation relative du bouton et de l'arbre tout en assurant la solidarisation en rotation de l'un et l'autre des éléments.

Dans le mode de réalisation des figures 14 et 15, le support de signes de repérage est également un plateau périphérique rotatif 90 à axe radial, partiellement visible à travers la lumière ou fenêtre 23 de carter, et comportant un pignon d'entraînement 92. Dans ce mode de réalisation, le pignon 92 engrène avec une crémaillère 97 ménagée sur une tige 98 montée coulissante axialement sur des guides du carter 3. La tige 98 est reliée au bouton 4 par une liaison de type hélicoïdal provoquant la translation axiale de la tige 98 sous l'effet d'une rotation du bouton 4. Pour cela, la tige comporte un bras radial 99 dont l'extrémité s'engage dans une rainure hélicoïdale 100 ménagée dans la face interne de la paroi cylindrique du bouton 4.

Lors de la rotation du bouton de réglage 4, cette rotation produit la translation de la tige 98, qui produit elle-même la rotation du plateau rotatif 90.

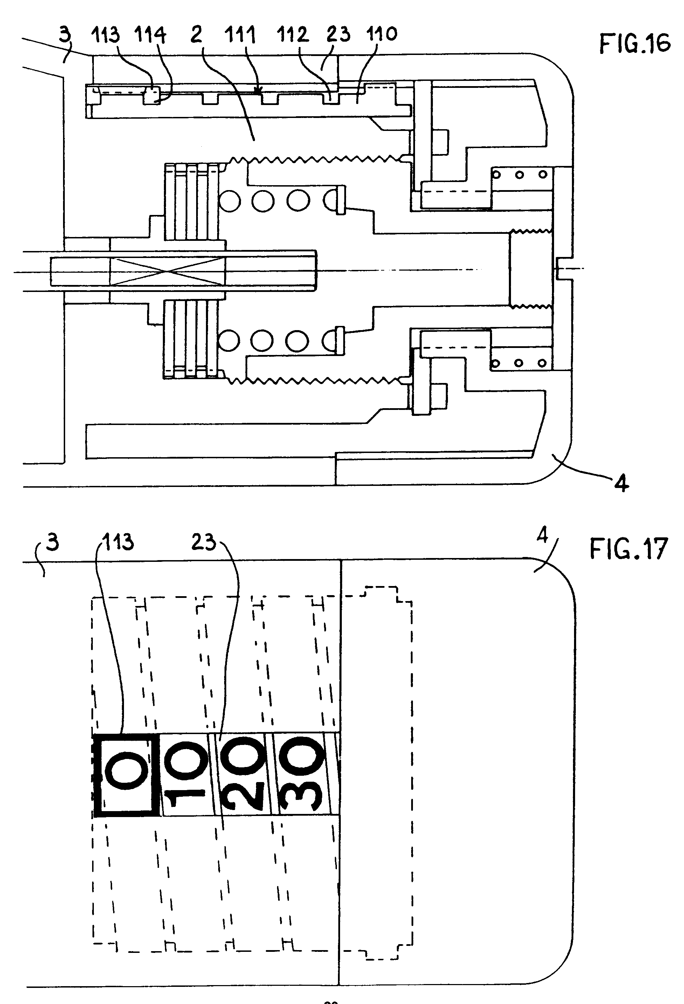

Dans le mode de réalisation représenté sur les figures 16 et 17, le moulinet comprend une lumière ou fenêtre périphérique 23 de forme allongée dans le sens axial, comme le représentent les figures. Dans ce mode de réalisation, le moyen support de signes de repérage est un tambour 110 rotatif coaxial au bouton 4 et solidaire en rotation dudit bouton 4. Le tambour 110 tourillonne sur le fût 2 de carter et comporte, sur sa surface périphérique cylindrique extérieure, une piste hélicoïdale 111 portant les signes de repérage, et un relief périphérique hélicoïdal de même pas que la piste hélicoïdale portant les signes de repérage. Par exemple, la surface extérieure porte une rainure hélicoïdale 112 dont l'intervalle définit la piste hélicoïdale 111. Un curseur 113 est monté coulissant longitudinalement sur des guides du carter, et comporte au moins une partie 114 en engagement avec le relief périphérique hélicoïdal tel que la rainure 112 du tambour 110. Le curseur 113 est positionné, comme le représentent les figures, à l'extérieur du tambour 110 et à l'intérieur du carter 3, en regard de la lumière longitudinale 23 de carter. Lors de la rotation du bouton de réglage 4, cette rotation produit d'une part la rotation du tambour 110, et simultanément la translation du curseur 113. A chaque position du bouton de réglage 4, le tambour 110 et le curseur 113 désignent l'un des signes disposés sur la piste 111 du tambour 110, le signe étant visible à travers la lumière 23 de carter.

Dans les modes de réalisation qui précèdent, les signes de repérage portés par le support sont visibles à travers une fenêtre ou lumière 23. On comprendra que l'on peut, en alternative, utiliser un autre moyen indicateur, par exemple une flèche ou un repère porté par le carter 3.

La présente invention n'est pas limitée aux modes de réalisation qui ont été explicitement décrits, mais elle en inclut les diverses variantes et généralisations contenues dans le domaine des revendications ci-après.

## Revendications

1. Moulinet de pêche, comprenant :
– un carter principal (3),
– un frein commandé par un bouton rotatif de frein (4) tourillonnant dans le carter,
– des moyens de repérage de la position angulaire du bouton rotatif de frein,
– et dans lequel la plage de réglage totale de frein requiert une plage de rotation du bouton rotatif de frein dont l'amplitude est supérieure à un tour, caractérisé en ce que :
– les moyens de repérage de la position angulaire du bouton rotatif de frein comprennent des moyens supports (10, 30, 60, 70, 71, 90, 110) et une suite ordonnée monotone de signes de repérage disposés sur lesdits moyens supports,
– les moyens de repérage comprennent au moins une pièce mobile constituée soit par lesdits moyens supports (10, 30, 60, 70, 71, 90, 110) soit par un curseur (113), ladite pièce mobile étant distincte du bouton et entrainée mécaniquement par le bouton (4) dans son déplacement en rotation par rapport au carter (3) pour se déplacer elle-même par rapport au carter sous l'action de la rotation du bouton (4) et mettre en valeur et rendre apparent, lors de son déplacement, l'un des signes de repérage du support à chaque position angulaire du bouton,
– de sorte qu'à chaque signe de repérage du support correspond une position angulaire unique du bouton (4), et qu'à chaque position angulaire du bouton (4) correspond un signe de repérage distinct et reconnaissable du support.

2. Moulinet selon la revendication 1, caractérisé en ce que ladite pièce mobile est constituée par le support lui-même qui se déplace sous l'action de la rotation du bouton de réglage (4), et qui présente en permanence au moins un signe de repérage en regard d'un repère fixe (23) du carter (3), de sorte que, lors de la rotation du bouton (4), les signes de repérage défilent en regard dudit repère fixe (23) de carter.

3. Moulinet selon la revendication 1, caractérisé en ce que :
– le moyen support est un tambour (110) rotatif coaxial au bouton (4) de réglage et solidaire en rotation dudit bouton, le tambour (110) comportant, sur sa surface périphérique cylindrique extérieure, une piste hélicoïdale (111) portant les signes de repérage, et un relief périphérique hélicoïdal (112),
– ladite pièce mobile est un curseur (113) monté coulissant longitudinalement sur des guides du carter (3) et comportant une partie (114) en engagement avec le relief périphérique hélicoïdal (112) de tambour (110),
– ledit curseur (113) étant positionné à l'extérieur dudit tambour et à l'intérieur du carter (3), en regard d'une lumière longitudinale (23) du carter, de telle manière que le curseur est en permanence en regard d'une portion de la piste hélicoïdale du tambour et que ladite portion de piste hélicoïdale est visible à travers la lumière (23) de carter.

4. Moulinet selon la revendication 2, caractérisé en ce que ledit support est un ruban (10) enroulé plusieurs fois autour d'une douille porte-ruban (11) avec un léger jeu radial, la douille porte-ruban (11) étant montée rotative sur un fût axial (2) de carter et coaxial au bouton et étant entraînée en rotation par ledit bouton de réglage (4), le ruban (10) étant solidarisé selon ses deux extrémités (15, 17) à la douille porte-ruban (11), et ayant une portion intermédiaire (24) coulissant entre des guides (21) du carter en regard d'une fenêtre (23) de carter, de sorte que lors de la rotation du bouton de réglage (4), la fenêtre de carter (23) laisse apparaître en permanence une portion (24) de spire intermédiaire de ruban portant les signes de repérage et défilant entre les guides (21) de carter qui assurent le maintien des autres spires de ruban à l'écart de la fenêtre.

5. Moulinet selon la revendication 4, caractérisé en ce que les guides de carter comprennent une languette (21) longitudinale de carter disposée entre la fenêtre (23) et la douille (11), une portion intermédiaire (24) de ruban (10) étant passée sur la languette, des moyens de butée longitudinaux assurant le calage longitudinal de la portion intermédiaire (24) de ruban sur la languette.

6. Moulinet selon la revendication 2, caractérisé en ce que le support (figure 4) est un anneau périphérique (30) monté rotatif sur le carter (3) coaxialement au bouton, l'anneau périphérique étant entraîné en rotation par le bouton de réglage (4) par l'intermédiaire d'un dispositif démultiplicateur, de sorte que la plage de réglage totale du bouton correspond au plus à une révolution de l'anneau périphérique (30), une lumière de carter (23) laissant apparente une portion périphérique de l'anneau portant les signes de repérage.

7. Moulinet selon la revendication 6, caractérisé en ce que le dispositif démultiplicateur comprend des satellites (31) à axes radiaux portés par l'anneau périphérique (30), chaque satellite (31) engrenant par une première piste périphérique dentée (32) sur une piste frontale dentée (34) de carter et par une seconde piste périphérique dentée (33) sur une piste frontale dentée (35) d'une bague intermédiaire (36), la bague intermédiaire (36) étant montée rotative et coulissante sur un fût axial (2) de carter et étant reliée au bouton de réglage (4) par une liaison mécanique autorisant sa libre translation axiale et interdisant sa rotation relative, des moyens élastiques (37) sollicitant en permanence ladite bague intermédiaire (36) en direction des satellites (31) pour assurer l'engrènement des satellites sur les pistes frontales (34, 35) dentées.

8. Moulinet selon la revendication 6, caractérisé en ce que le dispositif démultiplicateur (figure 5) comprend au moins un arbre de transmission (40) tourillonnant dans des paliers du carter (3) et portant un premier (41) et second (42) pignons, le premier pignon (41) engrenant sur la surface externe dentée d'un fût axial (43) solidaire du bouton (4), le second pignon (42) engrenant sur la surface interne dentée (44) de l'anneau périphérique (30).

9. Moulinet selon la revendication 6, caractérisé en ce que le dispositif démultiplicateur comprend un anneau porte-griffe (50) monté rotatif et coulissant sur un fût axial du carter et relié au bouton de réglage (4) par une liaison mécanique autorisant sa libre translation axiale et interdisant sa rotation relative, l'anneau porte-griffe (50) comportant des portions frontales saillantes (51) en appui contre une piste frontale (52) de carter formant came, ladite came comportant des parties saillantes (53) et des parties rentrantes (54) réparties, l'anneau porte-griffe (50) comportant des griffes frontales (55) destinées à s'engager dans les dents d'une piste dentée frontale (56) correspondante de l'anneau périphérique (30), des moyens d'indexage à engagement (56) étant prévus sur une surface frontale de l'anneau périphérique (30) et une surface frontale correspondante (57) du carter (3) pour maintenir l'anneau en position et freiner sa rotation en diverses positions angulaires réparties, des premiers moyens élastiques (58) repoussant l'anneau périphérique (30) axialement contre la surface frontale (57) de carter, des seconds moyens élastiques (59) repoussant l'anneau porte-griffe (50) vers l'anneau périphérique (30) pour maintenir les parties frontales saillantes (51) en appui contre la came (52) de carter, la came étant conçue de telle manière que lorsque les parties saillantes (51) d'anneau porte-griffe sont en engagement de partie rentrante (54) de came les griffes (55) engagent dans les dents (56) de l'anneau pour l'entraîner en rotation, et lorsque les portions saillantes (51) d'anneau porte-griffe sont en engagement de partie saillante (53) de came les griffes (55) sont dégagées et la rotation de l'anneau périphérique (30) est stoppée par les moyens d'indexage (56).

10. Moulinet selon la revendication 2, caractérisé en ce que le support de signes de repérage est un tambour (60) guidé en déplacement axial sur un fût axial (2) de carter, le tambour (60) étant relié mécaniquement au bouton de réglage (4) par une liaison autorisant sa libre translation relative axiale et interdisant sa rotation relative, le tambour (60) étant relié au fût de carter (2) par une liaison (63, 64) produisant un mouvement relatif hélicoïdal du tambour (60) sur le fût lors de la rotation du tambour provoquée par la rotation du bouton de réglage (4), le tambour (60) portant sur sa face extérieure une piste hélicoïdale (65) de signes de repérage défilant en regard d'une lumière (23) de carter.

11. Moulinet selon la revendication 2, caractérisé en ce que les moyens supports de signes de repérage comprennent :

– un anneau périphérique (70) monté rotatif sur le carter (3) coaxialement au bouton, l'anneau périphérique (70) étant entraîné en rotation par le bouton de réglage (4) par l'intermédiaire d'une liaison mécanique interdisant la rotation relative, l'anneau périphérique (70) portant sur sa surface extérieure une première piste (73) de signes de repérage défilant devant une lumière (23) de carter, l'anneau (70) comportant une surface frontale (74) munie d'une dent (75),

– un plateau rotatif (71) à axe (76) radial, comportant des dents périphériques (77, 78) écartées coopérant avec la dent (75) d'anneau périphérique, le plateau rotatif (71) portant sur sa face externe (79) une seconde piste (80) de signes de repérage défilant devant une lumière (23) de carter,

– de sorte qu'à chaque révolution d'anneau périphérique (70) la dent (75) provoque une rotation partielle du plateau (71) pour incrémenter le plateau d'un intervalle entre deux signes de repérage successifs de la seconde piste (80) de signes de repérage.

12. Moulinet selon la revendication 2, caractérisé en ce que le support de signes de repérage est un plateau périphérique rotatif (90) à axe radial monté sur le carter (3) et comportant une portion de sa surface extérieure (91) en regard d'une lumière (23) de carter laissant apparaître des signes de repérage, le plateau (90) comportant un pignon engrenant avec une vis (93) montée en bout d'un arbre axial (94) tourillonnant dans des paliers du carter (3), l'arbre (94) portant un pignon (95) engrenant avec une portion cylindrique axiale dentée (96) du bouton de réglage (4) autorisant une translation relative du bouton et de l'arbre.

13. Moulinet selon la revendication 2, caractérisé en ce que le support de signes de repérage est un plateau périphérique rotatif (90) à axe radial monté sur le carter (3) et comportant une portion de sa surface extérieure (91) en regard d'une lumière (23) de carter laissant apparaître des signes de repérage, le plateau (90) comportant un pignon (92) engrenant avec une crémaillère (97) ménagée sur une tige (98) montée coulissante axialement sur des guides du carter (3), la tige (98) étant reliée au bouton de réglage (4) par une liaison hélicoïdale (99, 100) provoquant la translation axiale de la tige (98) sous l'effet d'une rotation du bouton de réglage (4).

**Claims**

1. Fishing reel, comprising :
– a main case (3),
– a brake controlled by a rotary brake knob (4) journalled in the case,
– means for setting the angular position of the rotary brake knob,
– and in which the total adjustment range of the brake requires a range of rotation of the rotary brake knob whose amplitude is greater than one turn,
characterized in that :
– the means for setting the angular position of the rotary brake knob comprise support means (10, 30, 60, 70, 71, 90, 110) and a monotonic ordered succession of setting signs disposed on the support means,
– the setting means comprise at least one mobile part formed either by said support means (10, 30, 60, 70, 71, 90, 110) or by a slider (113), said mobile part being separate from the knob and driven mechanically by said knob (4) in its rotational movement with respect to the case (3) so as to move itself with respect to the case under the action of the rotation of the knob (4) and show, during its movement, one of the setting signs of the support in each angular position of the knob,
– so that, to each setting sign of the support, there corresponds a single angular position of the knob (4) and to each angular position of the knob (4) there corresponds a separate and recognizable setting sign of the support.

2. Reel according to claim 1, characterized in that said mobile piece is formed by the support itself, which moves under the action of the rotation of the setting knob (4), and which permanently has at least one setting sign opposite a fixed mark (23) on the case (3) so that, during rotation of the knob (4), the setting signs travel past said fixed mark (23) of the case.

3. Reel according to claim 1, characterized in that :
– the support means is a rotary drum (110) coaxial with the setting knob (4) and locked in rotation with said knob, the drum (110) having, on its external cylindrical peripheral surface, a helical track (111) carrying the setting signs and a helical peripheral relief (112),
– said mobile piece is a slider (113) mounted for sliding longitudinally on guides of the case (3) and comprising a portion (114) in engagement with the helical peripheral relief (112) of the drum (110),
– said slider (113) being positioned outside said drum and inside the case (3), opposite a longitudinal aperture (23) of the case, so that the slider is permanently opposite a portion of the helical track of the drum and said helical track portion is visible through the case aperture (23).

4. Reel according to claim 2, characterized in that said support is a ribbon (10) wound several times about a ribbon-holding socket (11) with a slight radial play, the ribbon-holding socket (11) being mounted for rotation on an axial barrel (2) of the case and coaxial with the knob and being rotated by said setting knob (4), the ribbon (10) being fast at both its ends (15, 17) with the ribbon-holding socket (11) and having an intermediate portion (24) sliding between guides (21) of the case opposite a case window (23), so that during rotation of the setting knob (4), the case window (23) permanently shows an intermediate ribbon turn portion (24) carrying the setting signs and travelling between the case guides (21) which hold the other ribbon turns away from the window.

5. Reel according to claim 4, characterized in that the case guides comprise a longitudinal tongue (21) of the case disposed between the window (23) and the socket (11), an intermediate portion (24) of the ribbon (10) being passed over the tongue, longitudinal abutment means providing longitudinal fixing of the intermediate ribbon portion (24) on the tongue.

6. Reel according to claim 2, characterized in that the support is a peripheral ring (30) mounted for rotation on the case (3) coaxially with the knob, the peripheral ring being rotated by the setting knob (4) through a step-down device, so that the total setting range of the knob corresponds at most to a revolution of the peripheral ring (30), an aperture (23) in the case showing a peripheral portion of the ring bearing the setting signs.

7. Reel according to claim 6, characterized in that the step-down device comprises planet gears (31) with radial axes carried by the peripheral ring (30), each planet gear (31) meshing by a first toothed peripheral track (32) with a front toothed track (34) of the case and by a second toothed peripheral track (33) with a front toothed track (35) of an intermediate ring (36), the intermediate ring (36) being mounted for rotation and sliding on an axial barrel (2) of the case and being connected to the setting knob (4) by a mechanical connection allowing free axial translation thereof and preventing relative rotation thereof, resilient means (37) permanently urging said intermediate ring (36) in the direction of the planet gears (31) to provide meshing of the planet gears on the front toothed tracks (34, 35).

8. Reel according to claim 6, characterized in that the step-down device comprises at least one transmission shaft (40) journalled in bearings of the case (3) and carrying a first (41) and second (42) pinions, the first pinion (41) meshing with the external toothed surface of an axial barrel (43) fast with the knob (4), the second pinion (42) meshing with the internal toothed surface (44) of the peripheral ring (30).

9. Reel according to claim 6, characterized in that the step-down device comprises a claw-carrying ring (50) mounted for rotation and sliding on an axial barrel of the case and connected to the setting knob (4) by a mechanical connection allowing free axial translation thereof and preventing relative rotation thereof, the claw-carrying ring (50) comprising projecting front portions (51) bearing against a front track (52) of the case forming a cam, said cam comprising projecting portions (53) and spaced apart re-entrant portions (54), the claw-carrying ring (50) comprising front claws (55) intended to engage in the teeth of a corresponding front toothed track (56) of the peripheral ring (30), engagement indexing means (56) being provided on a front surface of the peripheral ring (30) and a corresponding front surface (57) of the case (3) for containing the ring in position and braking its rotation at different spaced apart angular positions, first resilient means (58) urging the peripheral ring (30) axially against the front surface (57) of the case, second resilient means (59) urging the claw-carrying ring (50) towards the peripheral ring (30) so as to contain the front projecting portions (51) against the cam (52) of the case, the cam being designed so that when the projecting portions (51) of the claw-carrying ring are in engagement with the re-entrant cam portion (54), the claws (55) engage in the teeth (56) of the ring for driving it in rotation, and when the projecting claw-carrying portions (51) are in engagement with the projecting cam portion (53), the claws (55) are disengaged and rotation of the peripheral ring (30) is stopped by the indexing means (56).

10. Reel according to claim 2, characterized in that the setting signs support is a drum (60) guided in axial movement on an axial barrel (2) of the case, the drum (60) being connected mechanically to the setting knob (4) by a connection allowing its free axial relative translation and preventing its relative rotation, the drum (60) being connected to the case barrel (2) by a connection (63, 64) producing a relative helical movement of the drum (60) on the barrel during rotation of the drum caused by rotation of the setting knob (4), the drum (60) having on its external face a helical track (65) of setting signs travelling past an aperture (23) of the case.

11. Reel according to claim 2, characterized in that the setting sign support means comprise :
– a peripheral ring (70), mounted for rotation on the case (3) coaxially with the knob, the peripheral ring (70) being driven in rotation by the setting knob (4) through a mechanical connection preventing relative rotation, the peripheral ring (70) having on its external surface a first track (73) of setting signs travelling past an aperture (23) of the case, the ring (70) having a front surface (74) with a tooth (75),
– a rotary plate (71) with radial axis (76), comprising spaced apart peripheral teeth (77, 78) cooperating with the tooth (75) of the peripheral ring, the rotary plate (71) having on its external face (79) a second track (80) of setting signs travelling past an aperture (23) of the case,
– so that at each revolution of the peripheral ring (70) the tooth (75) causes a partial rotation of the plate (71) for incrementing the plate by an interval between two successive setting signs of the second track (80) of setting signs.

12. Reel according to claim 2, characterized in that the setting sign support is a rotary peripheral plate (90) with radial axis mounted on the case (3) and comprising a portion of its external surface (91) opposite an aperture (23) of the case showing setting signs, the plate (90) comprising a pinion meshing with a screw (93) mounted at the end of an axial shaft (94) journalled in bearings of the case (3), the shaft (94) carrying a pinion (95) meshing with an axial toothed cylindrical portion (96) of the setting knob (4), allowing relative translation of the knob and of the shaft.

13. Reel according to claim 2, characterized in that the setting signs support is a rotary peripheral plate (90) with radial axis mounted on the case (3) and comprising a portion of its external surface (91) opposite an aperture (23) of the case showing setting signs, the plate (90) comprising a pinion (92) meshing with a rack (97) formed on a rod (98) mounted for axial sliding on guides of the case (3), the rod (98) being connected to the setting knob (4) by a helical connection (99, 100) causing axial translation of the rod (98) under the effect of a rotation of the setting knob (4).

**Patentansprüche**

1. Angelwinde, welche aufweist:

– ein Hauptgehäuse (3),

– eine durch einen in dem Gehäuse drehbar gelagerten Rotationsbremsknopf (4) gesteuerte Bremse,

– Einrichtungen zum Anzeigen der Winkelposition des Rotationsbremsknopfes,

– und bei dem der gesamte Regelbereich der Bremse einen Rotationsbereich des Rotationsbremsknopfes benötigt, dessen Amplitude größer ist als eine Umdrehung,

**dadurch gekennzeichnet, daß**

– die Einrichtungen zum Anzeigen der Winkelposition des Rotationsbremsknopfes Stützeinrichtungen (10, 30, 60, 70, 71, 90, 110) und eine gleichmäßig geordnete Reihenfolge von auf den Stützeinrichtungen angeordneten Anzeigezeichen aufweisen,

– die Einrichtungen zum Anzeigen zumindest ein bewegliches Teil aufweisen, welches entweder aus den Stützeinrichtungen (10, 30, 60, 70, 71, 90, 110) besteht oder aux einem Läufer (113), wobei das bewegliche Teil von dem Knopf gesondert ist und durch den Knopf (4) in seiner Rotationsverschiebung bezüglich des Gehäuses (3) mechanisch mitgezogen wird, um sich seinerseits bezüglich des Gehäuses durch die Rotationswirkung des Knopfes (4) zu verschieben und um während seiner Verschiebung einem der Anzeigezeichen der Stütze bei jeder Winkelposition des Knopfes einen Wert zu geben und sichtbar zu machen,

– so daß jedem Anzeigezeichen der Stütze eine eindeutige Winkelposition des Knopfes (4) entspricht und daß jeder Winkelposition des Knopfes (4) ein gesondertes und erkennbares Anzeigezeichen der Stütze entspricht.

2. Winde nach Anspruch 1, dadurch gekennzeichnet, daß das bewegliche Teil aus der Stütze selbst besteht, welches sich unter der Wirkung der Rotation des Regelknopfes (4) verschiebt und welche andauernd zumindest ein Anzeigezeichen hinsichtlich eines festen Bezugspunktes (23) des Gehäuses (3) darstellt, so daß während der Rotation des Knopfes (4) die Anzeigezeichen hinsichtlich des festen Bezugspunktes (23) des Gehäuses vorbeilaufen.

3. Winde nach Anspruch 1, dadurch gekennzeichnet, daß:

– die Stützeinrichtung eine Rotationstrommel (110) ist, welche zu dem Regelknopf (4) koaxial und hinsichtlich der Rotation einstückig mit dem Knopf ist, wobei die Trommel (110) auf ihrer äußeren zylindrischen Oberfläche eine die Anzeigezeichen tragende schraubenförmige Spur (111) und ein schraubenförmiges Relief (112) am Rand aufweist,

– das bewegliche Teil ein Läufer (113) ist, welcher longitudinal gleitend auf Führungen des Gehäuses (3) montiert ist und einen Abschnitt (114) aufweist, welcher mit dem schraubenförmigen Relief (112) am Rande der Trommel (110) in Eingriff ist,

– der Läufer (113) außerhalb der Trommel (110) und innerhalb des Gehäuses (3) im Blickfeld einer länglichen Öffnung (23) des Gehäuses angeordnet ist, so daß der Läufer dauernd im Blickfeld eines Abschnitts der schraubenförmigen Spur der Trommel ist und der Abschnitt der schraubenförmigen Spur durch die Öffnung (23) des Gehäuses sichtbar ist.

4. Winde nach Anspruch 2, dadurch gekennzeichnet, daß die Stütze ein mehrmals um eine bandtragende Hülse (11) gewickeltes Band (10) ist, mit einem leichten radialen Spiel, wobei die bandtragende Hülse (11) rotierend auf einem axialen Schaft (2) des Gehäuses und koaxial zu dem Knopf montiert ist und durch den Regelknopf (4) in der Rotation mitgezogen wird, wobei das Band (10) an seinen beiden Enden (15, 17) mit der bandtragenden Hülse (11) verbunden ist, und mit einem Zwischenabschnitt (24), welcher zwischen Führungen (21) des Gehäuses im Blickfeld eines Fensters (23) des Gehäuses gleitet, so daß während der Rotation des Regelknopfes (4) das Fenster (23) des gehäuses permanent einen Zwischenabschnitt (24) der Bandwindung erscheinen läßt, welche die Anzeigezeichen trägt und an den Führungen (21) des Gehäuses vorbeiläuft, welche sicherstellen, daß die anderen Windungen des Bandes von dem Fenster weggehalten werden.

5. Winde nach Anspruch 4, dadurch gekennzeichnet, daß die Führungen des Gehäuses eine longitudinale Zunge (21) des Gehäuses aufweisen, welche zwischen dem Fenster (23) und der Hülse (11) angeordnet ist, wobei ein Zwischenabschnitt (24) des Bandes (10) über die Zunge geführt wird, wobei longitudinale Anschlageinrichtungen die longitudinale Einstellung des Zwischenabschnitts (24) des Bandes auf der Zunge sicherstellen.

6. Winde nach Anspruch 2, dadurch gekennzeichnet, daß die Stütze ein peripherer Ring (30) ist, der rotierend an dem Gehäuse (3) koaxial zu dem Knopf montiert ist, wobei der periphere Ring in der Rotation durch den Regelknopf (4) mittels einer Untersetzungsvorrichtung mitgezogen wird, so daß der gesamte Regelbereich des Knopfes höchstens einer Umdrehung des peripheren Ringes (30) entspricht, wobei eine Öffnung (23) des Gehäuses einen peripheren Abschnitt des die Anzeigezeichen tragenden Ringes erscheinen läßt.

7. Winde nach Anspruch 6, dadurch gekennzeichnet, daß die Untersetzungsvorrichtung durch den peripheren Ring (30) getragene Satelliten (31) mit radialen Achsen aufweist, wobei jeder Satellit (31) durch eine erste periphere gezahnte Spur (32) mit einer stirnseitigen gezahnten Spur (34) des Gehäuses und durch eine zweite periphere gezahnte Spur (33) mit einer stirnseitigen gezahnten Spur (35) eines Zwischenrings (36) in Eingriff ist, wobei der Zwischenring (36) rotierend und gleitend auf einem axialen Schaft (2) des Gehäuses montiert ist und an den Regelknopf (4) durch eine mechanische Verbindung verbuden ist, welche seiner freie axiale Translation zuläßt und seine relative Rotation verhindert, wobei elastische Einrichtungen (37) den Zwischenring (36) permanent in Richtung der Satelliten (31) drücken, um das Eingreifen der Satelliten mit den stirnseitigen gezahnten Spuren (34, 35) sicherzustellen.

8. Winde nach Anspruch 6, dadurch gekennzeichnet, daß die Untersetzungsvorrichtung zumindest eine Transmissionswelle (40) aufweist, welche in den Lagern des Gehäuse (3) drehbar gelagert ist und ein erstes (41) und zweites (42) Ritzel trägt, wobei das erste Ritzel (41) mit der externen gezahnten Oberfläche eines mit dem knopf (4) einstückigen axialen Schafts (43) in Eingriff ist und das zweite Ritzel (42) mit der internen gezahnten Oberfläche (44) des peripheren Ringes (30) in Eingriff ist.

9. Winde nach Anspruch 6, dadurch gekennzeichnet, daß die Untersetzungsvorrichtung einen Klauenträgerring (50) aufweist, welcher rotierend und gleitend auf einem axialen Schaft des Gehäuses montiert ist und mit dem Regelknopf (4) durch eine mechanische Verbindung verbunden ist, welche seine freie axiale Translation zuläßt und seine relative Rotation verhindert, wobei der Klauenträgerring (50) stirnseitige herausstehende Abschnitte (51) aufweist, die sich auf eine Nocken bildende stirnseitige Spur (52) des Gehäuses stützen, wobei der Nocken verteilte hervorstehende Teile (53) und hineingehende Teile (54) aufweist, wobei der Klauenträgerring (50) stirnseitige Klauen (55) aufweist, welche dazu bestimmt sind, mit den Zähnen einer stirnseitigen gezahnten Spur (56) in Eingriff zu sein, welche dem peripheren Ring (30) entspricht, Eingriff-Indizier-Vorrichtungen (56), welche an einer stirnseitigen Oberfläche des peripheren Ringes (30) und und einer entsprechenden stirnseitigen Oberfläche (57) des Gehäuses (3) bereitgestellt sind, um den Ring in seiner Position zu halten und um seine Rotation in verschiedene verteilte Winkelpositionen zu bremsen erste elastische Einrichtungen (58), welche den peripheren Ring (30) axial gegen die stirnseitige Oberfläche (57) des Gehäuses zurückdrücken, zweite elastische Einrichtungen (59), welche den Klauenträgerring (50) gegen den peripheren Ring (30) zurückdrücken, um die stirnseitigen hervorstehenden Teile (51) auf den Nocken (52) des Gehäuses gestützt zu halten, wobei der Nocken so entworfen ist, daß, während die hervorstehenden Teile (51) des Klauenträgerringes mit dem hineingehenden Teil (54) des Nockens in Eingriff sind, die Klauen (55) mit den Zähnen (56) des Ringes in Eingriff sind, um ihn in seiner Rotation mitzuziehen, und daß, wenn die hervorstehenden Abschnitte (51) des Klauenträgerringes mit dem hervorstehenden Teil (53) des Nockens in Eingriff sind, die Klauen (55) ausgerastet sind und die Rotation des peripheren Rings (30) durch die Indiziereinrichtungen (56) gestoppt wird.

10. Winde nach Anspruch 2, dadurch gekennzeichnet, daß die Stütze der Anzeigezeichen eine Trommel (60) ist, deren axiale Verschiebung auf einem axialen Schaft (2) des Gehäuses geführt wird, wobei die Trommel (60) mechanisch mit dem Regelknopf (4) durch eine Verbindung verbunden ist, die ihre freie relative axiale Translation zuläßt und ihre relative Rotation verhindert, wobei die Trommel (60) mit dem Schaft des Gehäuses (2) durch eine Verbindung (63, 64) verbunden ist, wodurch eine schraubenförmige Relativbewegung der Trommel (60) auf dem Schaft erzeugt wird während der durch die Rotation des Regelknopfes (4) hervorgerufenen Rotation der Trommel, wobei die Trommel (60) auf ihrer externen Oberfläche eine schraubenförmige Spur (65) von Anzeigezeichen trägt, welche im Blickfeld einer Öffnung (23) des Gehäuses vorbeilaufen.

11. Winde nach Anspruch 2, dadurch gekennzeichnet, daß die Stützeinrichtungen der Anzeigezeichen aufweisen;

– einen peripheren Ring (70), welcher rotierend auf dem Gehäuse (3) koaxial zu dem Knopf montiert ist, wobei der periphere Ring (70) in seiner Rotation durch den Regelknopf (4) mittels einer mechanischen Verbindung mitgezogen wird, welche die relative Rotation verhindert, wobei der periphere Ring (70) auf seiner externen Oberfläche eine erste Spur (73) von Anzeigezeichen trägt, welche von einer Öffnung (23) des Gehäuses vorbei laufen, wobei der Ring (70) eine Stirnfläche (74) aufweist, welche mit einem Zahn (75) versehen ist,

– eine rotierende Platte (71) mit radialer Achse (76), welche periphere, in Abständen angeordnete Zähne (77, 78) aufweist, welche mit dem Zahn (75) des peripheren Ringes zusammenwirken, wobei die rotierende Platte (71) auf ihrer externen Oberfläche (79) eine zweite Spur (80) von Anzeigezeichen trägt, welche vor einer Öffnung (23) des Gehäuses vorbeilaufen,

– so daß bei jeder Umdrehung des peripheren Rings (70) der Zahn (75) eine partielle Rotation der Platte (71) verursacht, um die Platte um ein Intervall zu inkrementieren zwischen zwei aufeinanderfolgenden Anzeigezeichen der zweiten Spur (80) von Anzeigezeichen.

12. Winde nach Anspruch 2, dadurch gekennzeichnet, daß die Stütze der Anzeigezeichen eine periphere rotierende Platte (90) mit radialer Achse ist, welche auf dem Gehäuse (3) montiert ist und einen Abschnitt ihrer externen Oberfläche (91) im Blickfeld einer Öffnung (23) des Gehäuses aufweist, wobei sie Anzeigezeichen erscheinen läßt, wobei die Platte (90) ein Ritzel aufweist, welches mit einer Schraube (93) in Eingrifft ist, welche am Ende eines axialen, in Lagern des Gehäuses (3) drehbar gelagerten Schaft (94) befestigt ist, wobei der Schaft (94) ein Ritzel (95) trägt, welches mit einem zylindrischen axialen gezahnten Abschnitt (96) des Regelknopfes (4) in Eingriff ist, wodurch eine relative Translation des Knopfes und des Schafts zugelassen wird.

13. Winde nach Anspruch 2, dadurch gekennzeichnet, daß die Stütze der Anzeigezeichen eine rotierende periphere Platte (90) mit radialer Achse ist, welche auf dem Gehäuse montiert ist, und einen Abschnitt ihrer externen Oberfläche (91) im Blickfeld einer Öffnung (23) des Gehäuses aufweist, wodurch Anzeigezeichen erscheinen gelassen werden, wobei die Platte (90) ein Ritzel (92) aufweist, welches mit einer auf einem Stab (98) ausgearbeiteten Zahnstange (97) in Eingriff ist, die axial gleitend auf Führungen des Gehäuses (3) montiert ist, wobei der Stab (98) mit dem Regelknopf (4) durch eine schraubenförmige Verbindung (99, 100) verbunden ist, welche die axiale Translation des Stabes (98) unter der Einwirkung einer Rotation des Regelknopfes (4) verursacht.

FIG.1

FIG.2

14

FIG.3

FIG.4

FIG.5

42
23
30
44
40
41
43   4

FIG.6

FIG.7

FIG.8

FIG.9

FIG.10

23

3

82

76  81  71  79  70  72

2

4

FIG.11

3

4

78  75  74

71  80  77  23  73

FIG.12

FIG.13

FIG.14

3   90   92   97   91   98

23   100   98

4

FIG.15

3   90   92   23   97   98   99   100   4

FIG.16

FIG.17